(19) Europäisches Patentamt
European Patent Office
Office européen des brevets

(11) Numéro de publication: **0 032 644**
**B1**

(12)
# FASCICULE DE BREVET EUROPEEN

(45) Date de publication du fascicule du brevet: **01.02.84**

(51) Int. Cl.³: **C 08 F 222/40**, C 08 G 73/12

(21) Numéro de dépôt: **80401838.0**

(22) Date de dépôt: **22.12.80**

(54) **Procédé pour éviter la cristallisation des N-N' diphénylène bis-imides dans les compositions thermodurcissables en contenant.**

(30) Priorité: **09.01.80 FR 8000369**

(43) *Date de publication de la demande:*
**29.07.81 Bulletin 81/30**

(45) Mention de la délivrance du brevet:
**01.02.84 Bulletin 84/5**

(84) Etats contractants désignés:
**BE CH DE FR GB IT LI LU NL SE**

(56) Documents cités:
**FR - A - 2 020 542**

(73) Titulaire: **RHONE-POULENC SPECIALITES CHIMIQUES, "Les Miroirs" 18, Avenue d'Alsace, F-92400 Courbevoie (FR)**

(72) Inventeur: **Locatelli, Jean-Louis, Les Charavelles 10, rue de Charavelle, F-38200 - Vienne (FR)**

(74) Mandataire: **Perret, Michel et al, RHONE-POULENC RECHERCHES Centre de Recherches de Saint-Fons Service Brevets B.P. 62, F-69190 Saint-Fons (FR)**

EP 0 032 644 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Procédé pour éviter la cristallisation des N—N' Diphénylène bis-imides dans les compositions thermodurcissables en contenant

La présente invention se situe dans le domaine des compositions thermodurcissables à base de bis-imides d'acides carboxyliques insaturés.

La copolymérisation des bis-imides d'acides carboxyliques insaturés avec des monomères polymérisables par initiation radicalaire ou ionique conduisant par durcissement sous l'effet de la chaleur à des polymères thermostables est connue. Pour la préparation de ces polymères en règle générale on homogénéise dans un premier temps les divers constituants par fusion à température modérée, puis dans un second stade, après mise en forme, la composition obtenue ou »prépolymère« est durcie en un polymère infusible et insoluble dans les solvants organiques. Le plus souvent la composition au stade prépolymère est stockée en vue de son utilisation ultérieure. Suivant la composition initiale, le degré d'avancement de la réaction et le type d'application envisagée le prépolymère peut se présenter à température ambiante sous l'aspect soit de résines plus ou moins visqueuses, soit de poudres de point de ramollissement plus ou moins élevé. Comme on opère le plus souvent en présence d'un excès de bis-imides par rapport à la stoechiométrie de la réaction d'addition, il arrive fréquemment qu'une fraction de bis-imide n'ayant pas encore pris part à la polymérisation cristallise par refroidissement dans le mélange conduisant à une composition hétérogène. Ce phénoméne représente, notamment dans le cas des résines fluides à température modérée, un inconvénient majeur pour l'utilisateur qui doit alors pour la mise en oeuvre réchauffer la résine jusqu'à fusion du bis-imide (généralement supérieure à 100°C), empêchant ainsi leur utilisation à température modérée. D'autre part certaines applications nécessitent des résines fluides à température peu élevée.

L'invention a pour but d'obtenir des compositions thermodurcissables à base de bis-imides qui soient homogènes à température ambiante en évitant la recristallisation du bis-imide en excès dans le prèpolymère.

L'invention a plus particuliérement pour objet un procédé d'obtention de compositions thermodurcissables à base de bis-imides utilisables à température ambiante ou peu élevée et qui n'ont aucune tendance à la cristallisation après un stockage prolongé.

Plus précisément l'invention a pour objet un procédé l'obtention de compositions thermodurcissables, homogènes à température ambiante, par chauffage à 50—150°C d'un mélange comprenant:

— au moins un bus-imide de formule

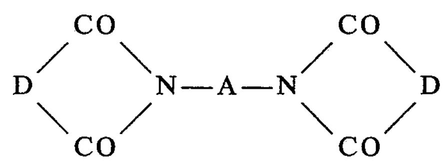

(I)

dans laquelle D représente

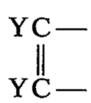 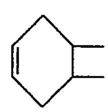 ou 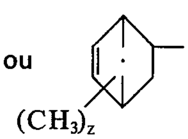

oú Y représente H, $CH_3$ ou Cl et z est égal à 0,1 ou 2 A représente le radical

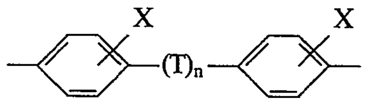

où T représente $-CH_2-$, $-C(CH_3)_2-$, $-O-$, $-S-$, $-SO_2-$, $-N=N-$ ou 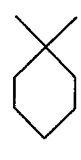

n est 0 ou 1 et X est nul, un groupement $CH_3$ ou un atome d'halogène,

— et au moins un monomere autre qu'un imide copolymérisable avec ledit imide

caractérisé en ce qu'on opère en présence de N-N' toluène bis-maléimide comme agent permettant

d'éviter la cristallisation du bisimide de formule (I).

Le N-N' toluène bis-maléimide peut-être le N-N'(4-méthyl, m-phénylène)bis-maléimide, le N-N'(2-methyl, m-phénylène)bis-maléimide ou le mélange des deux isomères.

Le bis-imide de formule (I) être notamment:

- le N,N'-4,4' diphénylène-bis-maléimide
- le N,N'-4,4' diphénylméthane-bis-maléimide
- le N,N'-4,4' diphénylméthane-bis-tétrahydrophtalimide
- le N,N'-4,4' diphényléther-bis-maléimide
- le N,N'-4,4' diphénylsulfure-bis-maléimide
- le N,N'-4,4' diphénylsulfone-bis-maléimide
- le N,N'-4,4' diphényl-1,1 cyclohexane-bis-maléimide
- le N,N'-4,4' diphénylméthane-bis-citraconimide
- le N,N'-4,4' diphényléther-bis-endométhylène tétrahydrophtalimide
- le N,N'-4,4' diphénylméthane-bis-chloromaléimide
- le N,N'-4,4' diphényl-1,1 propane-bis-maléimide
- le N,N'-4,4'-3,3'-dichlorodiphénylméthane-bis-maléimide

Parmi ces bis-imides on donne la préférence au N,N'-4,4' diphénylméthane-bis-maléimide.

On peut naturellement utiliser un mélange de ces diphénylène-bis-imides ou un mélange contenant un ou plusieurs de ces diphénylène-bis-imides en association avec des polyimides différents comme les N-N' alcoylène bis-imides et/ou des monoimides. Si l'on utilise un mélange comprenant un monoimide, le nombre de groupements imide apporté par le monoimide ne représente pas plus de 30% du nombre total de groupements imides apportés par le mélange polyimides + monoimides.

Les monomères copolymérisables avec les bis-imides de formule I renferment des liaisons insaturées de type vinylique, allylique, acrylique ou des groupements réactifs tels que $-OH$, $-NH_2$, $-NCO$. Le procédé selon l'invention n'est pas limité à un monomère particulier et s'applique dans tous les cas où le N,N' diphényléne-bis-imide cristallise par refroidissement au stade intermédiaire de la résine thermodurcissable en conduisant à une structure hétérogène. Le procédé offre cependant un interêt tout particulier pour la préparation de résines de coulée sans solvant utilisables à température ambiante ou modérée de viscosité 100 à 10 Pa · A à 20—50°C suivant la composition. Dans le cas de ces résines la recristallisation du bis-imide de formule (I) peut se produire au bout de quelques heures ou quelques jours suivant sa préparation.

A titre d'exemples non limitatifs de résines de ce type et qui possèdent après durcissement des propriétés intéressantes on peut citer les résines obtenues par copolymérisation avec le N-vinyl-pyrrolidone-2, l'acrylamide et les monomères éthyléniques insaturés ayant un degré de réactivité tel que la valeur du paramètre de résonance Q soit comprise entre 0,01 et 0,7 et la valeur du paramètre de polarité e soit inférieure ou égale à 0, de même que les résines obtenues par réaction avec un composé organosilicique hydroxylé. Ces résines et leur procédé de préparation ont été décrites dans les brevets belges 846 365, 876 616 et 876 617 et le brevet français 2 460 308.

Bien entendu les compositions peuvent également comprendre à titre d'adjuvants divers composés connus de l'homme de l'art permettant de modifier le comportement et les caractéristiques du produit fini. D'une manière générale ces adjuvants sont décrits dans les brevets précités. Parmi ces composés figurent notamment:

- les composés aromatiques possédant 2 à 4 cycles benzéniques, non sublimable à la pression atmosphérique jusqu'á 250°C et dont le point d'ébullition est supérieur à 250°C
- les polyesters insaturés

et/ou les monoméres insaturés possédant des doubles liaisons de types maléique, vinylique, acrylique, allylique permettant d'obtenir des résines ternaires plus fluides ainsi que les inhibiteurs et/ou accélérateurs de polymérisation habituels, charges, colorants et pigments.

La quantité de toluène bis-maléimide qui, selon le procédé de l'invention, permet d'éviter la cristallisation des N,N'diphénylène-bis-imides dans les mélanges thermodurcissables en contenant est variable et dépend de la nature du bis-imide et du ou des monomères copolymérisables. De façon surprenante il est apparu que dans certains cas une addition aussi faible que 1% par rapport au mélange des constituants permet d'obtenir une composition homogène à température ambiante.

D'une manière générale la température utilisée pour l'obtention d'une composition liquide homogéne se situe entre 50°C et 150°C. L'ordre d'addition des constituants n'est pas critique. On peut ajouter le toluène-bis-maléimide dans le mélange des divers constituants ou faire fondre ensemble les dérivés imides avant de les additionner aux monomères copolymérisables.

Comme il a été indiqué le procédé selon l'invention offre un intérêt tout particulier pour l'obtention de résines fluides et homogènes à température ambiante ou modérée pouvant être mises en oeuvre par coulée sans solvant, convenant notamment aux applications d'encapsulation dans le domaine électronique et/ou pour l'imprégnation soit de tissus ou mats de fibres minérales (verre, carbone) pour

une stratification ultérieure, soit de rovings pour la fabrication de pièces de révolution par enroulement filamentaire. Après durcissement à la chaleur des températures comprises entre 100 et 250°C, les propriétés mécaniques et thermiques des polymères obtenus ne sont pas défavorablement midifiées par l'addition du toluène bis-maléimide.

Les exemples suivants illustrent l'invention.

Exemple 1

Dans un réacteur muni d'un agitateur on homogénéise par fusion 74 g de N,N'-4,4' diphénylméthane-bis-maléimide, 1 g de N,N' toluène-bis-maléimide, 12,5 g de N-vinylpyrrolidone-2, 12,5 g d'une résine polyester composée de 40% de phtalate d'allyle et 60% d'un polyester préparé à partir d'acide maléique et nadique-trans et de propylène et d'éthylène glycol. Le mélange est agité à 115°C durant 30 minutes. La composition résultante dont la viscosité est inférieure à 200 mPa · s est refroidie à température ambiante. On obtient une solution limpide, translucide. Après 40 jours de stockage on n'observe aucune recristallisation.

Par comparaison, une composition préparée dans les mêmes conditions mais sans toluène-bis-maléimide se présente sous l'aspect d'une cire opaque, du N,N'-4,4' diphénylméthane-bis-maléimide ayant recristallisé au cours du refroidissement.

Exemple 2

On répète l'opération décrite à l'exemple 1 en utilisant 40 g de N,N'-4,4' diphénylméthane-bis-maléimide,10 g de N,N'-toluène-bis-maléimide, 12,5 g de N-vinylpyrrolidone-2 et 37,5 g de la résine polyester décrite à l'exemple 1. La résine obtenue après refroidissement à température ambiante est une solution limpide. On n'observe aucune recristallisation au cours du stockage pendant un mois.

Exemple 3

On homogénéise par fusion 30,5 g de N,N'-4,4' diphénylméthane-bis-maléimide, 10,5 g de N,N' toluène-bis-maléimide et 9 g de 2,2,4-(triméthyl)hexaméthylène-bis-maléimide. On ajoute 12,5 g de N-vinylpyrrolidone-2 et 37,5 g de la résine polyester décrite à l'exemple 1. Le mélange est agité 30 minutes à 120°C pour obtenir une composition liquide homogène. Après refroidissement, la composition est translucide et présente une viscosite de 50 Pa · s à 25°C. On n'observe aucune recristallisation après 2 mois de stockage à température ambiante. Le temps de gel est de 71 minutes à 150°C et 20 minutes à 170°C.

Une résine préparée dans les mêmes conditions mais sans toluène-bis-maléimide cristallise dans les quelques jours suivant sa préparation.

Exemple 4

On répète l'exemple 3 mais en utilisant 46 g de N,N'-4,4' diphénylméthane-bis-maléimide, 16 g de N,N' toluène-bis-maléimide, 13 g de N,N' hexaméthylène-bis-maléimide, 12,5 g de N-vinylpyrrolidone-2 et 12,5 g de résine polyester. La viscosité de la résine obtenue est de 10 Pa · s à 60°C et 10 poises à 80°C. Le temps de gel est de 43 minutes à 150°C et 13 minutes à 170°C.

Une résine préparée dans les mêmes conditions mais sans toluène-bis-maléimide cristallise rapidement à température ambiante.

Exemple 5

Dans un réacteur muni d'un agitateur on homogénéise par fusion 9 g de N,N'-4,4' diphénylméthane-bis-maléimide, 6 g de N,N' toluène-bis-maléimide, 15 g de phthalate d'allyle et 30 g de l'ester diméthylacrylique du bisphénol A éthoxylé en présence de 60 mg de tétrachloro-para-benzoquinone. Le mélange est agité 115°C durant une heure. La composition résultante dont la viscosité est d'environ 100 mPa · s est refroidie à température ambiante. On obtient une solution limpide, translucide. Après 21 jours de stockage on n'observe aucune recristallisation.

Par comparaison une composition préparée dans les mêmes conditions mais sans toluène-bis-maléimide se présente sous l'aspect d'une cire opaque, du N,N'-4,4' diphénylméthane-bis-maléimide ayant recristallisé au cours du refroidissement.

Exemple 6

On homogénéise par fusion 30,5 g de N,N'-4,4' diphenylméthane-bis-maléimide, 10,5 g de N,N'-toluène-bis-maléimide et 9 g de 2,2,4-(triméthyl)hexaméthylène-bis-maléimide. On ajoute 50 g d'huile méthylphénylpolysiloxanique dihydroxylée (viscosité d'environ 100 Pa · s et teneur en OH d'environ 7% en poids) et 0,6 g de benzimidazole. Le mélange maintenu 5 minutes à 150°C est un liquide

homogène. Après refroidissement la composition est translucide et demeure homogène, sans recristallisation à température ambiante.

La viscosité est de 5 000 poises environ à 25° C.

Exemple 7

7,5 g de N,N'-4,4'-diphényléther-bis-maléimide, 7,5 g de N,N'-toluène-bis-maléimide, 3,75 g de N-vinylpyrrolidone-2 et 11,25 g de la résine polyester décrite dans l'exemple 1 sont homogénéisés par fusion. Le mélange est agité 20 minutes à 138—140° C. Après refroidissement à la température ambiante la composition est une masse liquide, visqueuse, translucide. On n'observe aucune recristallisation après 24 jours de stockage à température ambiante.

Exemple 8

On répète l'exemple 7 en utilisant 10,5 g de N,N'-4,4'-diphényléther-bis-maléimide, 4,5 g de N,N'-toluène-bis-maléimide, 3,75 g de N-vinylpyrrolidone-2 et 11,25 g de résine polyester. La composition refroidie à température ambiante est une masse visqueuse et translucide. On n'observe pas de recristallisation après 24 jours de stockage.

Une composition préparée dans les mêmes conditions mais sans toluène-bis-maléimide cristallise au cours du refroidissement.

**Revendications**

1. Procédé d'obtention de compositions thermodurcissables, homogènes à température ambiante, par chauffage à 50—150° C d'un mélange comprenant:

— au moins un bis-imide de formule

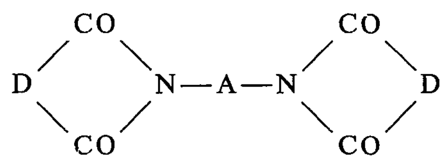

(I)

dans laquelle D représente

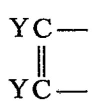

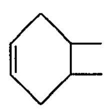

ou

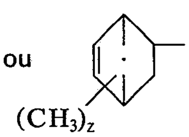

où Y représente H, $CH_3$ ou Cl et z est égal à 0,1 ou 2 A représente le radical

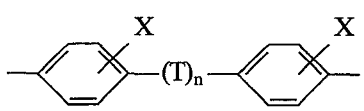

où T représente $-CH_2-$, $-C(CH_3)_2-$, $-O-$, $-SO_2-$, $-N=N-$ ou 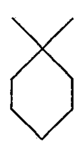,

n est 0 ou 1 et X est nul, un groupement $CH_3$ ou un atome d'halogène,

— et au moins un monomère autre qu'un imide copolymérisable avec ledit imide

caractérisé en ce qu'on opère en présence de N,N' toluène-bis-maléimide comme agent permettant d'éviter la cristallisation du bis-imide de formule (I).

2. Procédé selon la revendication 1 dans lequel le bis-imide de formule (I) est le N,N'-4,4' diphénylméthane-bis-maléimide.

3. Procédé selon la revendication 1 dans lequel on utilise au moins un bis-imide de formule (I) en association avec un N,N'-alcoylène-bis-imide et/ou un monoimide.

4. Procédé selon l'une quelconque des revendications 1 à 3 dans lequel le monomère copolymérisable est un monomère insaturé de type vinylique, allylique ou acrylique.

5. Procédé selon la revendication 4 dans lequel le monomère insaturé est le N-vinylpyrrolidone-2.

6. Procédé selon l'une quelconque des revendications 1 à 3 dans lequel le monomère copolymérisable renferme des groupements réactifs $-OH$, $-NH_2$, $-NCO$.

7. Procédé selon la revendication § dans lequel le monomère copolymérisable est un composé organosilicique hydroxylé.

8. Procédé selon l'une quelconque des revendications 1 à 6 dans lequel la composition comprend en outre un composé aromatique ayant 2 à 4 cycles benzéniques, non sublimable et dont le point d'ébullition est supérieur à 250° C, et/ou un polyester insaturé.

9. Compositions thermodurcissables homogènes à température ambiante obtenues par le procédé selon l'une quelconque des revendications 1à 8.

## Patentansprüche

1. Verfahren zur Erzielung von wärmehärtbaren, bei Umgebungstemperatur homogenen, Zusammensetzungen durch Erhitzen auf 50 bis 150° C eines Gemisches, umfassend:

— mindestens ein bis-Imid der Formel

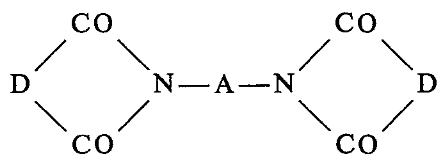

(I)

worin D bedeutet

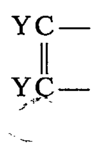 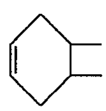 oder 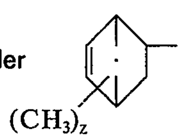

worin Y H, $CH_3$ oder Cl bedeutet und z gleich Null, 1 oder 2 ist, A den Rest

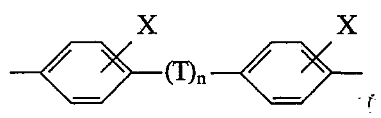

bedeutet, worin T $-CH_2-$, $-C(CH_3)_2-$, $-O-$, $-S-$, $-SO_2-$, $-N=N-$ oder 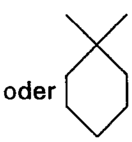

darstellt. n Null oder 1 ist und X = Null, eine Gruppe $CH_3$ oder ein Halogenatom,

— und mindestens ein Monomeres, anders als ein Imid, copolymerisierbar mit diesem Imid,

dadurch gekennzeichnet, daß man in Gegenwart von N,N'-Toluol-bis-maleinimid als Mittel, das die Kristallisation des bis-Imids der Formel I zu verhindern vermag, arbeitet.

2. Verfahren gemäß Anspruch 1, dadurch gekennzeichnet, daß das bis-Imid der Formel I das N,N'-4,4'-Diphenylmethan-bis-maleinimid ist.

3. Verfahren gemäß Anspruch 1, dadurch gekennzeichnet, daß man mindestens ein bis-Imid der Formel I zusammen mit einem N,N'-Alkylen-bis-imid und/oder einem mono-Imid verwendet.

4. Verfahren gemäß einem der Ansprüche 1 bis 3, dadurch gekennzeichnet, daß das copolymerisierbare Monomere ein ungesättigtes Monomeres vom Vinyl-, Allyl- oder Acryltyp ist.

5. Verfahren gemäß Anspruch 4, dadurch gekennzeichnet, daß das ungesättigte Monomere N-Vinylpyrrolidon-2 ist.

6. Verfahren gemäß einem der Ansprüche 1 bis 3, dadurch gekennzeichnet, daß das copolymerisierbare Monomere reaktive Gruppen $-OH$, $-NH_2$, $-NCO$ einschließt.

7. Verfahren gemäß Anspruch, dadurch gekennzeichnet, daß das copolymerisierbare Monomere eine hydroxylierte Organosiliciumverbindung ist.

8. Verfahren gemäß einem der Ansprüche 1 bis 6, dadurch gekennzeichnet, daß die Zusammensetzung außerdem eine aromatische Verbindung mit 2 bis 4 Benzolringen, die nicht sublimierbar ist und deren Siedepunkt oberhalb 250° C ist, und/oder einen ungesättigten Polyester umfaßt.

9. Wärmehartbare, bei Umgebungstemperatur homogene, Zusammensetzungen, erhalten nach

dem Verfahren gemäß einem der Ansprüche 1 bis 8.

**Claims**

1. Process for the preparation of thermosetting compositions, homogeneous at ambient temperature, by heating to a temperature ranging from 50° C to 150° C an admixture of:

— at least one bis-imide having the formula

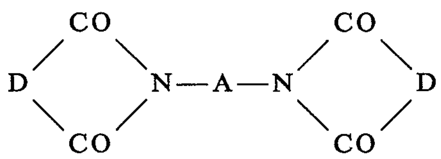

(I)

in which D represents

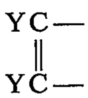 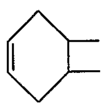 or 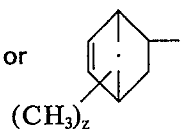

in which Y represents H, $CH_3$ ou Cl and z equal to 0,1 or 2 and A represents the radical:

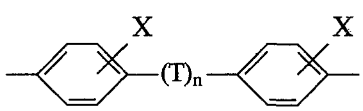

in which T represents $-CH_2-$, $-C(CH_3)-$, $-O-$, $-S-$, $-SO_2-$, $-N=N-$, or 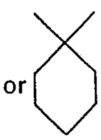

n is 0 or 1 and X is zero, a $CH_3$ group or a halogen atom.

—and at least one comonomer other than an imide copolymerizable therewith

caracterized in that the reaction is carried out in the presence of N,N′-toluene-bis-maleimide to preclude the crystallization of the bis-imide of the formula (1) therefrom.

2. Process as defined by claim 1, said bis-imide having the formula (1) being N,N′-4,4′-diphenylmethane-bis-maleimide.

3. Process as defined by claim 1 in which at least one bis-imide having the formula (1) is used with an N,N′-alkylene-bis-imide and/or a monoimide.

4. Process as defined by claims 1 to 3 in which the copolymerisable comonomer is an unsaturated monomer comprising vinyl, allyl or acrylic insaturation.

5. Process as defined by claim 4 in which the unsaturated comonomer is the N-vinyl pyrrolidin- 2 one.

6. Process as defined by claims 1 to 3 in which the copolymerizable comonomer is comprising —OH, $-NH_2$, —NCO functional groups.

7. Process as defined by claim 6 in which the copolymerized comonomer is an hydroxylated organopolysiloxane.

8. Process as defined by claims 1 to 6 in which the composition is further comprising an aromatic compound having 2 to 4 benzene rings which cannot be sublimed and having a boiling point above 250° C and/or an unsaturated polyester.

9. Thermosetting compositions, homogeneous at ambient temperature obtained by the process according to the claims 1 to 8.